# DEMANDE DE BREVET EUROPEEN

(11) **EP 3 771 255 A1**
(43) Date de publication de la demande: **27.01.2021**
(21) Numéro de dépôt: 20187043.3
(22) Date de dépôt: 21.07.2020
(51) Int. Cl.: H04W 48/18, H04W 88/06

(54) **PROCEDE DE COMMUNICATION DE DONNEES À BASSE CONSOMMATION ÉNERGÉTIQUE ENTRE UN TERMINAL MOBILE ET UN SERVEUR DISTANT**

(30) Priorité: 22.07.2019 FR 1908299
(71) Demandeur: Bouygues Telecom, 75116 Paris (FR)
(72) Inventeur: COLA, Philippe, 78200 MANTES LA JOLIE (FR)
(74) Mandataire: Regimbeau

(57) **Abrégé**

La présente invention concerne un procédé de communication de données entre un terminal mobile (1) et un serveur distant (3), caractérisé en ce qu'il comprend la mise en œuvre par un module de traitement de données (11) du terminal mobile (1) d'étapes de :
(a) détermination d'une aptitude ou une inaptitude du terminal mobile (1) à utiliser un réseau étendu basse consommation, LPWAN (20) ;
(b) Si le terminal mobile (1) est déterminé apte à utiliser ledit réseau LPWAN (20), communication sans fil avec ledit serveur distant (3) via ledit réseau LPWAN (20) ; sinon communication sans fil avec ledit serveur distant (3) via un réseau global basse consommation, LPGAN (21).

## Description

### DOMAINE TECHNIQUE GENERAL

La présente invention concerne le domaine des objets communicants.

Plus précisément, elle concerne un procédé de communication de données à basse consommation énergétique entre un terminal mobile et un serveur distant.

### ETAT DE L'ART

Le M2M (« Machine to Machine ») est une branche en pleine expansion des télécoms visant à permettre l'interaction autonome entre « objets communicants », c'est-à-dire dispositifs (tels que des compteurs électriques, des véhicules, des périphériques domotiques, etc.) équipés de moyens de communication réseau et interagissant sans intervention humaine.

Cette technologie fonctionne en utilisant des réseaux de communication mobile tels que le réseau GSM et ses dérivés (GPRS, UMTS, LTE, etc.).
Les dernières normes telles que le LTE mettent l'accent sur le débit (jusqu'à 300Mbits/s), en vue d'une utilisation sur les smartphones. Or on constate que la grande majorité des applications M2M n'ont en réalité besoin que d'un débit de quelques octets par jour. La plupart des communications entre objets consistent en effet seulement en un envoi occasionnel de leur état ou de leur position. De surcroît, les protocoles tels que LTE entraînent une forte consommation électrique, alors qu'il est essentiel de minimiser les consommations énergétiques des objets communicants pour qu'ils puissent avoir une autonomie compatible avec une utilisation autonome. Pour ces raisons, les réseaux mobiles existants ne sont pas les plus adaptés pour le M2M.
Par conséquent, d'autres protocoles de communication ont émergé, pour la plupart basés sur une technologie radio autour des bandes libres ISM (industrielle, scientifique et médicale). On peut citer LoRa™, ou Sigfox™.

Il s'agit de protocoles très bas débit (jusqu'à 1kbit/s), longue portée (plusieurs kilomètres), et très basse consommation. A titre d'exemple, les moyens de communication réseau nécessaires pour un objet communicant peuvent fonctionner plusieurs années avec une pile bouton.

Aujourd'hui, de sorte à minimiser au maximum la consommation, les objets communicants utilisent principalement des réseaux locaux (LAN, Local Access Network) de type Bluetooth Low Energy (BLE), Radio-Identification (RFID), Communication en Champ Proche (NFC, Near Field Communication) ou WiFi, et utilisent secondairement les réseaux de type LoRa, c'est-à-dire lorsque les réseaux LAN ne sont plus accessibles.

Une telle solution est satisfaisante mais reste cantonnée à des applications à faible mobilité, car la portée des réseaux LAN est très faible, au mieux de quelques dizaines de mètres. De surcroit, LoRa n'est pas disponible partout et surtout utilise des fréquences différentes selon les continents. Or, aujourd'hui, une connectivité mondiale est demandée.

Il serait par conséquent souhaitable de disposer d'une nouvelle solution de communication sans-fil qui soit universelle pour les objets communicants tout en visant toujours une consommation énergétique minimale.

### PRESENTATION DE L'INVENTION

Selon un premier aspect, la présente invention se rapporte donc à un procédé de communication de données entre un terminal mobile et un serveur distant, caractérisé en ce qu'il comprend la mise en oeuvre par un module de traitement de données du terminal mobile d'étapes de :
(a) détermination d'une aptitude ou une inaptitude du terminal mobile à utiliser un réseau étendu basse consommation, LPWAN ;
(b) Si le terminal mobile est déterminé apte à utiliser ledit réseau LPWAN, communication sans fil avec ledit serveur distant via ledit réseau LPWAN ; sinon communication sans fil avec ledit serveur distant via un réseau global basse consommation, LPGAN.

Selon des caractéristiques avantageuses et non limitatives :
le réseau LPWAN est un réseau terrestre, et le réseau LPGAN est un réseau satellitaire.

Ledit réseau LPWAN est de type LoRa™ ;

Le terminal mobile comprend un premier module de communication adapté pour se connecter au réseau LPWAN et un deuxième module de communication adapté pour se connecter au réseau LPGAN.

L'étape (b) comprend, si le terminal mobile est déterminé apte à utiliser ledit réseau LPWAN, la désactivation du deuxième module de communication ; sinon la désactivation du premier module de communication.

Le procédé comprend, si le terminal mobile a été précédemment déterminé inapte à utiliser le réseau LPWAN, la répétition des étapes (a) et (b) lorsqu'un déplacement du terminal mobile est détecté.

L'étape (a) comprend l'écoute d'un trafic descendant du réseau LPWAN.

Le terminal mobile est déterminé apte à utiliser ledit réseau LPWAN si une signature protocolaire du trafic descendant sur ledit réseau LPWAN est détectée pendant ladite écoute d'un trafic descendant du réseau LPWAN.

L'étape (a) comprend, si une signature protocolaire du trafic descendant sur ledit réseau LPWAN est détectée pendant ladite écoute d'un trafic descendant du réseau LPWAN, la vérification qu'un message présentant ladite signature protocolaire du trafic descendant est un message montant dudit réseau LPWAN. Selon un deuxième aspect, est proposé un terminal mobile caractérisé en ce qu'il comprend un module de traitement de données configuré pour :
- déterminer une aptitude ou une inaptitude du terminal mobile à utiliser un réseau étendu basse consommation, LPWAN ;
- Si le terminal mobile est déterminé apte à utiliser ledit réseau LPWAN, communiquer sans fil avec un serveur distant via ledit réseau LPWAN ; sinon communiquer sans fil avec ledit serveur distant via un réseau global basse consommation, LPGAN.

Selon un troisième et un quatrième aspects, l'invention concerne un produit programme d'ordinateur comprenant des instructions de code pour l'exécution d'un procédé selon le premier aspect de communication de données entre un terminal mobile et un serveur distant ; et un moyen de stockage lisible par un équipement informatique sur lesquels un produit programme d'ordinateur comprend des instructions de code pour l'exécution d'un procédé selon le premier aspect de communication de données entre un terminal mobile et un serveur distant.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig.1] la figure 1 représente un mode réalisation préféré d'une architecture pour la mise en œuvre du procédé selon l'invention ;
[Fig. 2] la figure 2 est un diagramme illustrant un mode de réalisation préféré du procédé selon l'invention.

### DESCRIPTION DETAILLEE

### Architecture

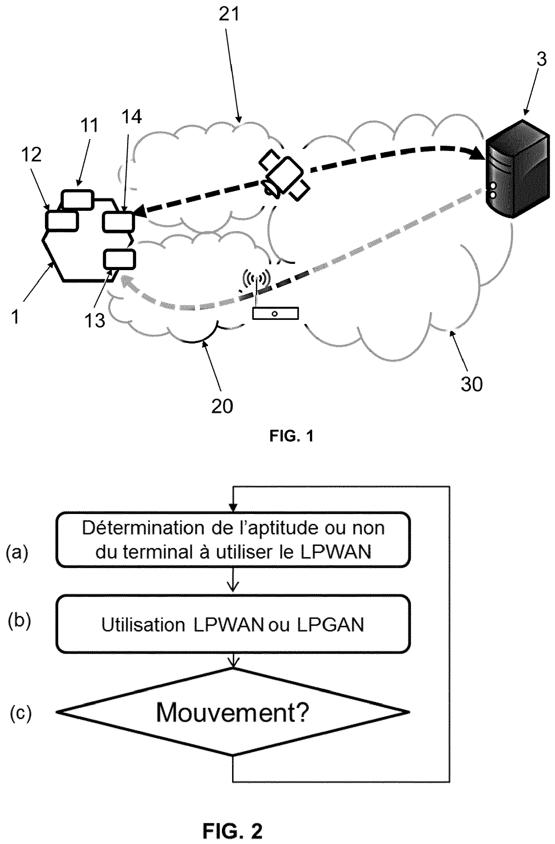

En référence aux dessins et en particulier à la **figure 1**, l'invention concerne un procédé d'échange de données impliquant un objet communiquant, désigné en tant que terminal mobile 1. Plus précisément, il s'agit d'un procédé de communication de données entre le terminal mobile 1 et un serveur distant 3 (que les données soit montantes ou descendantes).

Le terminal mobile 1 peut en effet être n'importe quel équipement comprenant un module de traitement de données 11 (de type processeur, microcontrôleur), éventuellement une mémoire 12 (par exemple flash), des moyens de géolocalisation et/ou de mesure inertielle, et cherchant à échanger des données sans fil avec le serveur distant 3, qui peut être n'importe quel équipement de traitement de données typiquement disposé dans un réseau principal tel que le réseau internet 30. Par exemple, le terminal 1 peut souhaiter transmettre des données de géolocalisation au serveur 3, et ce dernier lui renvoyer des instructions en fonction de ces données de géolocalisation.

A ce titre le terminal mobile comprend typiquement un premier module de communication 13 et un deuxième module de communication 14.

Le premier module de communication 13 est adapté pour se connecter à un réseau étendu basse consommation, LPWAN, 20.

Par LPWAN, on entend « Low Power Wide Area Network » (en français réseau étendu à faible consommation énergétique), c'est-à-dire une classe de réseaux WAN, terrestres, dédiés aux objets connectés. Il s'agit en effet de réseaux sans fil par ondes radio (Ces réseaux utilisent les bandes libres ISM. En Europe l'ETSI à normalisé la bande 868 MHz pour cet usage, aux USA il s'agit de la bande 920 MHz) à moyenne ou longue portée offrant des débits très faibles comparativement aux réseaux de communication mobiles tels que EDGE, UMTS ou LTE (quelques dizaines à quelques centaines de kbit/s au lieu de plusieurs dizaines de Mbit/s), et ainsi une sollicitation énergétique très faible des émetteurs. Ces derniers peuvent fonctionner pendant des années avec une batterie.

On citera l'exemple préféré des réseaux LPWAN de type LoRa™ ou Sigfox™, mais on pourra également utiliser les réseaux LTE-M (« LTE for M2M ») et NB-IoT (« NarrowBand - Internet of Things »). De façon classique et en référence à la figure 1, le réseau LPWAN 20 est interconnecté avec le réseau internet 30, de sorte à permettre la communication du terminal mobile 1 avec le serveur 3.

Le premier module de communication 14 est adapté pour se connecter à un réseau global basse consommation, LPGAN, 21.

Par LPGAN, on entend « Low Power Global Area Network » (en français réseau global à faible consommation énergétique), c'est-à-dire une nouvelle classe de réseaux à couverture mondiale, satellitaires.

Plus précisément, un réseau LPGAN 21 prend typiquement la forme d'une constellation de satellites (souvent des nanosatellites en orbite basse), auxquels le deuxième module de communication 14 peut se connecter, par exemple KINEIS basé sur la constellation ARGOS, etc. On pourra également citer les constellations Eutelsat, Hiber, etc. A nouveau le réseau LPGAN 20 est interconnecté avec le réseau internet 30, de sorte à permettre la communication du terminal mobile 1 avec le serveur 3.

### Procédé

On comprend que :
- un réseau LPWAN a une couverture étendue mais pas complète (existence de zones blanches, limitation aux territoires ayant développé un réseau), et donc n'est pas toujours disponible ;
- un réseau LPGAN a une couverture mondiale.

Le présent procédé propose ainsi d'utiliser de manière principale le réseau LPWAN 20 et de manière secondaire le réseau LPGAN 21. En effet d'une part le réseau LPGAN 21 est accessible presque partout du fait de son caractère global, et d'autre part il entraîne une consommation basse mais toujours plus élevée que le réseau LPWAN (250 mW, versus 25 mW). Il est donc parfait comme solution de backup ou complémentaire en termes de couverture.

En référence à la **figure 2****,** le présent procédé commence ainsi par une étape (a) de détermination par le module de traitement 11 du terminal mobile 1 d'une aptitude ou une inaptitude dudit terminal mobile 1 à utiliser le réseau LPWAN 20. En d'autres termes, cette étape permet de déterminer si le réseau LPWAN est localement disponible pour le terminal 1, i.e. utilisable là où il est. « Aptitude/Inaptitude » doit s'interpréter de manière large et signifie seulement qu'une utilisation du réseau LPWAN 20 par le terminal mobile 1 est possible ou non.

Il est important de comprendre que même si on parle d'aptitude ou non « du terminal mobile 1 », ce dernier n'est en pratique jamais fautif. En cas d'inaptitude généralement le réseau LPWAN 10 est soit inaccessible du fait de la position du terminal mobile 1 (zone blanche) soit accessible mais pas d'une manière fonctionnelle (que ce soit à cause d'un signal trop faible, d'un problème de connectivité, de fréquence, etc.).

On décrira plus loin comment mettre en œuvre l'étape (a) de manière astucieuse pour minimiser sa consommation énergétique.

Ensuite, dans une étape (b), une communication sans fil avec ledit serveur distant 3 est mise en œuvre d'une façon choisie parmi deux en fonction du résultat de l'étape (a) :
- si le terminal mobile 1 est déterminé apte à utiliser ledit réseau LPWAN 20, la communication sans fil avec ledit serveur distant 3 est via ledit réseau LPWAN 20 ;
- sinon (si le terminal mobile 1 est déterminé inapte à utiliser ledit réseau LPWAN 20), la communication sans fil avec ledit serveur distant 3 est via le réseau LPGAN 21.

En d'autres termes on utilise si possible le réseau LPWAN 20, et sinon on utilise le réseau LPGAN 21.

Si une nouvelle communication de données avec le serveur 3 est ultérieurement souhaitée, il est possible de simplement répéter l'étape (b), i.e. réutiliser le même réseau 20 ou 21, ou alors réitérer l'étape (a) de sorte à voir si les conditions ont changé.

Dans un cas où des données sont envoyées de manière ponctuelle a une fréquence faible (par un objet communicant simple envoyant une information une fois par jour), les étapes (a) et (b) peuvent être mises en œuvre à chaque fois. Alternativement, pour limiter au maximum la consommation de données, l'étape (a) n'est réitérée que dans certains cas, en particulier si le terminal mobile 1 est en communication sans fil avec ledit serveur distant 3 via le réseau LPGAN 21 (i.e. si le terminal 1 a été déterminé inapte à utiliser le réseau LPWAN 20), puisque communiquer via le réseau LPGAN 21 consomme plus d'énergie que communiquer via le réseau LPWAN 20.

En particulier, il peut être intéressant de détecter si le terminal mobile 1 a bougé et/ou si une durée prédéterminée s'est écoulée. Si c'est le cas, l'étape (a) est relancée car il y a des chances que le terminal mobile 1 soit à nouveau apte à utiliser le réseau LPWAN 20 (on est peut-être sorti d'une zone blanche).

A ce titre, le procédé peut comprendre si le terminal mobile 1 a été précédemment déterminé inapte à utiliser le réseau LPWAN 20, une étape (c) de détection d'un déplacement du terminal mobile 1 par son module de traitement de données 11 (par exemple en comparant deux géolocalisations successives, ou sur la base de données inertielles si le terminal 1 est pourvu d'au moins un module de mesure inertielle de type accéléromètre, etc.). Le procédé comprend alors la répétition des étapes (a) et (b) lorsqu'un déplacement du terminal mobile 1 est détecté.

L'idée de la durée prédéterminée est d'éviter de retenter intempestivement d'utiliser le réseau LPWAN 20 alors que le terminal ne s'est déplacé que de quelques mètres, on peut fixer un seuil minimum par exemple de 10 minutes avant de relancer l'étape (a) pour éviter une consommation inutile. Similairement, on peut prévoir un seuil maximum par exemple de 1 jour à l'issue duquel on relance quand même l'étape (a) même si le terminal n'a pas bougé, pour essayer d'éviter quand même de rester connecté sur le réseau LPGAN 21 qui est plus consommateur.

De manière préférée, lors de l'étape (b) n'est activé que le module de communication 13, 14 correspondant au réseau 20, 21 utilisé.

Plus précisément, si le terminal mobile 1 est déterminé apte à utiliser ledit réseau LPWAN 20, le deuxième module de communication 14 est désactivé ; sinon (si le terminal mobile 1 est déterminé inapte à utiliser ledit réseau LPWAN 20) le premier module de communication 13 est désactivé (et le deuxième module de communication 14 est activé).

A noter que seul le premier module de communication 13 a besoin d'être activé lors de l'étape (a), de sorte que généralement si le terminal 1 est déterminé apte à utiliser le réseau LPWAN 20 le deuxième module de communication 14 est déjà désactivé.

A noter qu'on peut être dans un cas, si le terminal mobile 1 a été récemment déterminé inapte à utiliser ledit réseau LPWAN 20 (i.e. l'étape (b) utilise le réseau LPGAN 21 de sorte que le deuxième module de communication 14 est activé mais pas le premier module de communication 13), dans lequel lors d'une répétition de l'étape (a) le premier module de communication 13 est réactivé alors que le deuxième module 14 l'est déjà. Alors, l'un des deux sera nécessairement désactivé à l'occurrence suivante de l'étape (b).

### Ecoute du réseau LPWAN

L'étape (a) peut être mise en œuvre de nombreuses manières différentes.

La difficulté est qu'un réseau LPWAN 20 tel que LoRa n'émet pas de signal balise par exemple, comme le GSM (pour lequel le mobile connait d'avance la bande de fréquence).

Il serait possible d'envoyer un ping d'exploration, ce qui n'est d'une part pas vraiment prévu dans le standard, et d'autre part pourrait poser des problèmes de légalité, car comme expliqué les fréquence radio des réseaux LPWAN 20 ne sont pas les mêmes partout au monde. De surcroit, l'émission d'un tel ping aurait une consommation énergétique élevée.

De manière avantageuse, l'étape (a) comprend l'écoute d'un trafic du réseau LPWAN 20, et plus précisément l'écoute d'un trafic descendant (i.e. downlink, c'est-à-dire d'une passerelle du réseau LPWAN 20 vers un objet communiquant) et non montant (i.e. uplink, c'est-à-dire d'un objet communiquant vers une passerelle du réseau LPWAN 20). On note que les protocoles des réseaux LPWAN (tel que LoRaWAN pour un réseau de type LoRa) ne sont pas symétriques et les messages montants et descendants ne sont pas les mêmes. Cela peut paraître surprenant d'écouter le trafic descendant, car le trafic montant constitue la très grande majorité du trafic LPWAN (la plupart des objets communicants ne font que remonter des données) et il est bien plus facile à détecter. L'intérêt de l'écoute du trafic descendant est qu'elle permet au terminal 1 d'être sûr que le réseau LPWAN 20 est bien accessible et autorisé (au sens utilisation de la bonne bande ISM). Le trafic montant des objets communicants alentours ne prouve en effet strictement rien, car des balises peuvent continuer à émettre même sans réseau, voire sur des fréquences non autorisées s'ils ne se trouvent pas dans leur région d'origine.

Par « écoute » on entend la tentative de détection, c'est-à-dire l'observation des signaux radio environnants de sorte à identifier ou non du trafic montant. Il est possible qu'aucun trafic descendant ne soit détecté pendant toute l'écoute.

La rareté du trafic descendant (on a une chance sur 10 de tomber sur du trafic descendant à un endroit où il y en a) nécessite une durée d'écoute assez longue de l'ordre de plusieurs minutes, sous peine de déterminer de manière erronée que le terminal 1 ne serait pas apte à utiliser le réseau LPWAN 20. On peut ainsi prévoir une durée d'écoute prédéterminée par exemple 10 minutes : si du trafic descendant est détecté avant la fin de ladite durée d'écoute, le terminal mobile 1 est déterminé apte à utiliser ledit réseau LPWAN 20. Inversement, si à la fin de ladite durée d'écoute aucun trafic descendant n'a été détecté, le terminal mobile 1 est déterminé inapte à utiliser ledit réseau LPWAN 20.

De surcroit, même si elle peut durer longtemps la seule écoute, et surtout l'écoute du trafic descendant n'a qu'une consommation très faible (quelques µW).

En ce qui concerne la façon de détecter du trafic descendant lors de l'écoute, de manière particulièrement préférée le module de traitement de données 11 cherche une signature protocolaire du trafic descendant sur ledit réseau LPWAN 20, i.e. une forme d'onde représentative d'un message descendant conformément au protocole du réseau LPWAN 20, appelée également « chirp » (en français gazouillement). En effet, les réseaux LPWAN 20 tels que LoRa utilisent une technique de modulation par étalement de spectre de type « Chirp spread spectrum ».

Pour reformuler, il n'est pas nécessaire de chercher à lire les messages montants, il suffit de trouver un signal radio « ressemblant » à ce que l'on peut attendre d'un message descendant du réseau LPWAN 20, d'où la faible consommation pour détecter la présence du trafic. Le terminal mobile 1 peut être directement déterminé apte à utiliser ledit réseau LPWAN 20 si une telle signature protocolaire du trafic descendant sur ledit réseau LPWAN 20 est détectée pendant ladite écoute d'un trafic descendant du réseau LPWAN 20.

Pour éviter tout risque de faux positif on peut prévoir qu'une fois une telle signature protocolaire du trafic descendant sur ledit réseau LPWAN 20 est détectée, le message correspondant est lu par le terminal 1 de sorte à vérifier qu'il s'agit bien d'un message montant dudit réseau LPWAN 20, et ainsi confirmer que le terminal mobile 1 peut être déterminé apte à utiliser ledit réseau LPWAN 20.

### Serveur et produit programme d'ordinateur

Selon un deuxième aspect, l'invention concerne un terminal mobile 1 configuré pour la mise en œuvre du présent procédé.

En particulier, le module de traitement de données 11 du terminal mobile 1 est configuré pour (lorsqu'il souhaite communiquer des données avec un serveur distant 3) déterminer une aptitude ou une inaptitude du terminal mobile 1 à utiliser un réseau étendu basse consommation, LPWAN 20 ; puis, si le terminal mobile 1 est déterminé apte à utiliser ledit réseau LPWAN 20, communiquer sans fil avec le serveur distant 3 via ledit réseau LPWAN 20, et sinon communiquer sans fil avec ledit serveur distant 3 via un réseau global basse consommation, LPGAN 21.

Les module de traitement de données 11 est typiquement configuré pour écouter un trafic descendant du réseau LPWAN 20 et déterminer le terminal 1 comme apte à utiliser ledit réseau LPWAN 20) si une signature protocolaire du trafic descendant sur ledit réseau LPWAN 20 est détectée pendant une écoute d'un trafic descendant du réseau LPWAN 20.

Selon un troisième et un quatrième aspects, l'invention concerne un produit programme d'ordinateur comprenant des instructions de code pour l'exécution (en particulier sur les moyens de traitement de données 11 du terminal 1) du procédé de communication de données entre un terminal mobile 1 et un serveur distant 3, ainsi que des moyens de stockage lisibles par un équipement informatique (notamment une mémoire 12 du terminal 1) sur lequel on trouve ce produit programme d'ordinateur.

## Revendications

1. Procédé de communication de données entre un terminal mobile (1) et un serveur distant (3), **caractérisé en ce qu'**il comprend la mise en œuvre par un module de traitement de données (11) du terminal mobile (1) d'étapes de :
(a) détermination d'une aptitude ou une inaptitude du terminal mobile (1) à utiliser un réseau étendu basse consommation, LPWAN (20), comprenant l'écoute d'un trafic descendant du réseau LPWAN (20) ;
(b) Si le terminal mobile (1) est déterminé apte à utiliser ledit réseau LPWAN (20), communication sans fil avec ledit serveur distant (3) via ledit réseau LPWAN (20) ; sinon communication sans fil avec ledit serveur distant (3) via un réseau global basse consommation, LPGAN (21).

2. Procédé selon la revendication 1, dans lequel le réseau LPWAN (20) est un réseau terrestre, et le réseau LPGAN (21) est un réseau satellitaire.

3. Procédé selon la revendication 2, dans lequel ledit réseau LPWAN est de type LoRa™.

4. Procédé selon l'une des revendications 1 à 3, dans lequel le terminal mobile (1) comprend un premier module de communication (13) adapté pour se connecter au réseau LPWAN et un deuxième module de communication (14) adapté pour se connecter au réseau LPGAN.

5. Procédé selon la revendication 4, dans laquelle l'étape (b) comprend, si le terminal mobile (1) est déterminé apte à utiliser ledit réseau LPWAN (20), la désactivation du deuxième module de communication (14) ; sinon la désactivation du premier module de communication (13).

6. Procédé selon l'une des revendications 1 à 5, comprenant, si le terminal mobile (1) a été précédemment déterminé inapte à utiliser le réseau LPWAN (20), la répétition des étapes (a) et (b) lorsqu'un déplacement du terminal mobile (1) est détecté.

7. Procédé selon l'une des revendications 1 à 6, dans lequel le terminal mobile (1) est déterminé apte à utiliser ledit réseau LPWAN (20) si une signature protocolaire du trafic descendant sur ledit réseau LPWAN (20) est détectée pendant ladite écoute d'un trafic descendant du réseau LPWAN (20).

8. Procédé selon la revendication 7, dans lequel l'étape (a) comprend, si une signature protocolaire du trafic descendant sur ledit réseau LPWAN (20) est détectée pendant ladite écoute d'un trafic descendant du réseau LPWAN (20), la vérification qu'un message présentant ladite signature protocolaire du trafic descendant est un message montant dudit réseau LPWAN (20).

9. Terminal mobile (1) **caractérisé en ce qu'**il comprend un module de traitement de données (11) configuré pour :
- déterminer une aptitude ou une inaptitude du terminal mobile (1) à utiliser un réseau étendu basse consommation, LPWAN (20), comprenant l'écoute d'un trafic descendant du réseau LPWAN (20) ;
- Si le terminal mobile (1) est déterminé apte à utiliser ledit réseau LPWAN (20), communiquer sans fil avec un serveur distant (3) via ledit réseau LPWAN (20) ; sinon communiquer sans fil avec ledit serveur distant (3) via un réseau global basse consommation, LPGAN (21).

10. Produit programme d'ordinateur comprenant des instructions de code pour l'exécution d'un procédé selon l'une des revendications 1 à 8 de communication de données entre un terminal mobile (1) et un serveur distant (3), lorsque ledit programme est exécuté par un ordinateur

11. Moyens de stockage lisibles par un équipement informatique sur lesquels un produit programme d'ordinateur comprend des instructions de code pour l'exécution d'un procédé selon l'une des revendications 1 à 8 de communication de données entre un terminal mobile (1) et un serveur distant (3).
